# FASCICULE DE BREVET EUROPEEN

(11) **EP 3 190 310 B1**
(45) Date de publication et mention de la délivrance du brevet: **23.10.2019**
(21) Numéro de dépôt: 16204227.9
(22) Date de dépôt: 15.12.2016
(51) Int. Cl.: F16F 15/14, F16F 15/129

(54) **DISPOSITIF D'AMORTISSEMENT PENDULAIRE**
PENDEL-DÄMPFUNGSVORRICHTUNG
PENDULUM DAMPING DEVICE

(30) Priorité: 08.01.2016 FR 1650138
(43) Date de publication de la demande: 12.07.2017
(73) Titulaire: Valeo Embrayages, 80009 Amiens Cedex 2 (FR)
(72) Inventeur: HENNEBELLE, Michaël, 80000 AMIENS (FR); VERHOOG, Roel, 60190 GOURNAY SUR ARONDE (FR)
(74) Mandataire: Cardon, Nicolas

(56) Documents cités:
- EP-A1- 2 607 743
- WO-A1-2014/096612
- DE-A1-102013 225 622
- DE-A1-102014 116 855
- DE-A1-102014 216 752

## Description

La présente invention concerne un dispositif d'amortissement pendulaire, notamment pour un système de transmission de véhicule automobile.

Dans une telle application, le dispositif d'amortissement pendulaire peut être intégré à un système d'amortissement de torsion d'un embrayage apte à relier sélectivement le moteur thermique à la boîte de vitesses, afin de filtrer les vibrations dues aux acyclismes du moteur. Un tel système d'amortissement de torsion est par exemple un double volant amortisseur.

En variante, dans une telle application, le dispositif d'amortissement pendulaire peut être intégré à un disque de friction de l'embrayage, à un volant solidaire du vilebrequin, à un double embrayage à sec ou humide, ou à un convertisseur de couple hydrodynamique.

Un tel dispositif d'amortissement pendulaire met classiquement en œuvre un support et un ou plusieurs corps pendulaires mobiles par rapport à ce support, le déplacement par rapport au support de chaque corps pendulaire étant guidé par deux organes de roulement coopérant d'une part avec des pistes de roulement solidaires du support, et d'autre part avec des pistes de roulement solidaires des corps pendulaires. Chaque corps pendulaire comprend par exemple deux masses pendulaires rivetées entre elles.

Il est connu de choisir le dispositif d'amortissement, par exemple via la forme des pistes de roulement, de manière à ce que ce dernier filtre l'ordre d'excitation d'un moteur thermique à deux cylindres du véhicule, encore appelé « ordre 1 », l'ordre d'excitation d'un moteur thermique étant de façon connue le nombre d'explosions de ce moteur par tour de vilebrequin. De tels dispositifs sont très sensibles à la force de gravité, cette dernière pouvant alors causer des déplacements non souhaités des corps pendulaires, et donc affecter les performances de filtrage.

Pour remédier à ce problème, il est par exemple connu de la demande DE 10 2012 221 103 de prévoir des ressorts entre deux corps pendulaires voisins circonférentiellement, de manière à ce que les corps pendulaires ainsi reliés résistent à la force de gravité exercée tour à tour sur ces derniers lorsque le dispositif est animé d'un mouvement de rotation. L'insertion de ces ressorts suppose de ménager des logements additionnels dans les corps pendulaires ou de prévoir des moyens de fixation appropriés sur ces corps pendulaires, ce qui est coûteux et complexe. Du fait de l'insertion des ressorts, une fréquence de résonance additionnelle apparaît par ailleurs. L'insertion des ressorts peut encore nécessiter de ménager des découpes ouvertes dans le support du dispositif, réduisant alors le débattement des corps pendulaires. En outre, il est nécessaire de dimensionner correctement les ressorts et le maintien dans le temps des caractéristiques des ressorts n'est pas garanti.

La demande DE 10 2013 225 622 divulgue un dispositif d'amortissement pendulaire selon le préambule de la revendication 1.

L'invention a pour objet de réduire l'influence de la gravité sur les corps pendulaires, notamment lorsque ces derniers ont pour but de filtrer l'ordre d'excitation d'un moteur thermique à deux cylindres du véhicule, tout en remédiant à tout ou partie des inconvénients ci-dessus.

L'invention y parvient, selon l'un de ses aspects, à l'aide d'un dispositif d'amortissement pendulaire selon la revendication 1.

Le frottement contre le support de l'organe de roulement permet de ralentir le déplacement de cet organe de roulement, et le ralentissement de cet organe de roulement peut être transmis au corps pendulaire dont le mouvement est alors ralenti. Ainsi, le déplacement de ce corps pendulaire sous l'effet de la gravité est atténué.

La portion élastiquement déformable frotte par exemple contre le support lors de tout le déplacement de cet organe de roulement par rapport au support.

En variante, la portion élastiquement déformable ne frotte contre le support qu'en fin de déplacement de l'organe de roulement par rapport au support. Lors d'un déplacement du corps pendulaire depuis sa position de repos, il existe ainsi une première plage de déplacement de l'organe de roulement par rapport au support lors de laquelle la portion élastiquement déformable ne frotte pas contre le support, puis une deuxième plage de déplacement de cet organe de roulement par rapport au support lors de laquelle la portion élastiquement déformable frotte contre le support. La deuxième plage de déplacement peut se terminer lors de la venue en butée du corps pendulaire contre le support.

La portion élastiquement déformable appartient à une rondelle montée sur l'organe de roulement. La rondelle est fixée sur l'organe de roulement, étant alors immobile par rapport à ce dernier.

Toute la rondelle peut être élastiquement déformable. En variante, seule la portion de la rondelle destinée à venir frotter contre le support, notamment la partie la plus extérieure de la rondelle depuis l'axe de cette dernière, est élastiquement déformable.

La rondelle est par exemple de type Belleville.

La rondelle peut être montée sur l'organe de roulement par rivetage ou par encliquetage ou par soudure, par exemple. Le cas échéant, l'organe de roulement peut présenter plusieurs rayons successifs, et la rondelle peut être montée sur l'un quelconque de ces rayons, par exemple sur le plus petit rayon, sur le plus grand rayon, ou sur un rayon intermédiaire.

La rondelle peut présenter une partie centrale sensiblement plane s'étendant autour d'un axe, et une partie extérieure par rapport à cet axe qui s'étend obliquement par rapport à la partie centrale. La partie extérieure de la rondelle peut être plane ou incurvée. La partie extérieure de la rondelle comprend par exemple :
- d'une part une fraction proximale naissant sur la partie centrale et se rapprochant du support, puis
- d'autre part une fraction distale s'éloignant du support et définissant l'extrémité extérieure de la rondelle par rapport à son axe.

Une telle forme en S de la partie extérieure de la rondelle peut permettre un frottement contre une surface autre qu'une arête vive du support.

Le cas échéant, l'organe de roulement peut porter deux portions élastiquement déformables se succédant axialement, par exemple via deux rondelles élastiquement déformable se succédant axialement. L'une de ces rondelles vient alors s'appliquer contre une premier côté d'extrémité axiale du support tandis que l'autre rondelle vient s'appliquer contre un deuxième côté d'extrémité axiale du support.

Au sens de la présente demande :
- « axialement » signifie « parallèlement à l'axe de rotation du support » ou « parallèlement à l'axe longitudinal de l'organe de roulement », selon le cas,
- « radialement » signifie « le long d'un axe appartenant à un plan orthogonal à l'axe de rotation du support et coupant cet axe de rotation du support»,
- « angulairement » ou « circonférentiellement » signifie « autour de l'axe de rotation du support »,
- « orthoradialement » signifie « perpendiculairement à une direction radiale »,
- « solidaire » signifie « rigidement couplé », et
- la position de repos d'un corps pendulaire est celle dans laquelle ce corps pendulaire est centrifugé sans être soumis à des oscillations de torsion provenant des acyclismes du moteur thermique. Dans la position centrifugée, chaque organe de roulement via à la fois en contact avec la première piste de roulement et en contact avec la deuxième piste de roulement.

Dans tout ce qui précède, le support peut comprendre au moins une face chanfreinée contre laquelle la portion élastiquement déformable frotte lors de tout ou partie du déplacement de cet organe de roulement par rapport au support. Cette face chanfreinée est par exemple obtenue en modifiant la forme d'une extrémité axiale de la première piste de roulement solidaire du support. Cette face chanfreinée peut être plane ou arrondie, ou présenter toute autre forme.

La face chanfreinée peut s'étendre circonférentiellement et présenter une forme non constante circonférentiellement. La face chanfreinée peut ainsi comprendre une forme évolutive, permettant de faire varier la force de frottement exercé par le support sur l'organe de roulement, et ainsi le ralentissement du mouvement du corps pendulaire.

La face chanfreinée peut comprendre :
- une première portion s'étendant de part et d'autre d'une position neutre contre laquelle frotte la portion élastiquement déformable portée par l'organe de roulement lorsque le corps pendulaire est au repos, et
- deux deuxièmes portions, chaque deuxième portion s'étendant angulairement au-delà de la première portion en éloignement de la position neutre.

La première portion peut être circonférentiellement située entre les deux deuxièmes portions, la première portion de la face chanfreinée ayant une forme différente de la forme des deuxièmes portions de cette face chanfreinée.

La forme de la première portion et la forme des deuxièmes portions peuvent être telles que la force de frottement exercée par la portion élastiquement déformable portée par l'organe de roulement sur la première portion de la face chanfreinée soit inférieure à la force de frottement exercée par la portion élastiquement déformable sur une deuxième portion de la face chanfreinée. La force de frottement exercée par la portion élastiquement déformable portée par l'organe de roulement sur la première portion de la face chanfreinée peut être nulle. Autrement dit, le ralentissement du corps pendulaire lorsque l'organe de roulement guidant le déplacement de ce corps pendulaire coopère avec la première portion de la face chanfreinée est moindre que lorsque cet organe de roulement coopère avec une deuxième portion de la face chanfreinée. Lorsque l'organe de roulement coopère avec la première portion de la face chanfreinée, la force de frottement peut être faible, voire nulle, n'affectant ainsi que marginalement le déplacement du corps pendulaire et n'affectant alors pas ses performances de filtrage. En revanche, lorsque l'organe de roulement coopère avec l'une des deuxièmes portions de la face chanfreinée, la force de frottement peut être plus importante, ralentissant de manière plus importante le déplacement du corps pendulaire.

Cette différence de force de frottement est par exemple obtenue via un angle de chanfrein par rapport à un plan perpendiculaire à l'axe de rotation du support plus élevé pour la première portion que pour les deuxièmes portions. Les deux droites définissant cet angle de chanfrein divergent en direction de l'axe de la rondelle.

L'angle de chanfrein peut rester constant à une première valeur sur toute la première portion et rester constant à une deuxième valeur sur toute la deuxième portion, prenant une même deuxième valeur d'une deuxième portion à l'autre.

En variante, l'angle de chanfrein peut varier au sein d'une première plage de valeurs sur la première portion, l'angle de chanfrein peut varier au sein d'une deuxième plage de valeurs sur une deuxième portion, et l'angle de chanfrein peut varier au sein d'une troisième plage de valeurs sur une autre deuxième portion, les deuxième et troisième plages de valeurs étant le cas échéant égales.

La première portion s'étend par exemple sur une dimension circonférentielle mesurée le long de la face chanfreinée comprise entre 70% et 90%, notamment 80% ou 85%, de la dimension circonférentielle de cette face chanfreinée, qui est mesurée depuis l'axe de rotation du support entre les extrémités circonférentielles des deuxièmes portions les plus éloignées de la position neutre. Autrement dit, la première portion peut représenter entre 70% et 90% de la longueur totale, circonférentiellement parlant, de la face chanfreinée. On peut ainsi faire correspondre la première portion de la face chanfreinée à la portion de la première piste de roulement le long de laquelle le roulement de l'organe de roulement permet un filtrage important des oscillations de torsion. Ainsi, le frottement de l'organe de roulement contre le support n'affecte pas les performances de filtrage fournies par le dispositif d'amortissement pendulaire.

En combinaison avec tout ce qui précède, le corps pendulaire peut également comprendre au moins une face chanfreinée contre laquelle la portion élastiquement déformable portée par l'organe de roulement frotte lors de tout ou partie de son déplacement, notamment tout son déplacement, par rapport au corps pendulaire. Ainsi, au frottement exercé par le support sur l'organe de roulement peut s'ajouter un frottement exercé par le corps pendulaire sur l'organe de roulement, de sorte que le ralentissement du mouvement du corps pendulaire est amplifié.

Cette face chanfreinée est par exemple obtenu en modifiant la forme d'une extrémité axiale de la deuxième piste de roulement solidaire du corps pendulaire. Cette face chanfreinée peut être plane ou arrondie, ou présenter toute autre forme. La face chanfreinée peut s'étendre circonférentiellement et présenter une forme non constante circonférentiellement. La face chanfreinée peut ainsi comprendre une forme évolutive, permettant de faire varier la force de frottement exercé par l'organe de roulement sur le corps pendulaire.

La face chanfreinée peut comprendre :
- une première portion s'étendant de part et d'autre d'une position neutre contre laquelle frotte la portion élastiquement déformable portée par l'organe de roulement lorsque le corps pendulaire est au repos, et
- deux deuxièmes portions, chaque deuxième portion s'étendant angulairement au-delà de la première portion en éloignement de la position neutre.

La force de frottement exercée par la portion élastiquement déformable portée par l'organe de roulement sur la première portion de la face chanfreinée peut être nulle.

Le cas échéant, la première portion de la face chanfreinée du corps pendulaire peut correspondre exactement à la première portion de la face chanfreinée du support, et chaque deuxième portion de la face chanfreinée du corps pendulaire peut correspondre exactement à une deuxième portion de la face chanfreinée du support, c'est-à-dire que dès lors que l'organe de roulement coopère avec la première portion de la face chanfreinée du corps pendulaire il coopère également avec la première portion de la face chanfreinée du support, et dès lors que l'organe de roulement coopère avec une deuxième portion de la face chanfreinée du corps pendulaire, il coopère également avec une deuxième portion de la face chanfreinée du support.

Selon un premier exemple de mise en œuvre de l'invention, le dispositif comprend un unique support et le corps pendulaire comprend:
- une première et une deuxième masses pendulaires espacées axialement l'une par rapport à l'autre et mobiles par rapport au support, la première masse pendulaire étant disposée axialement d'un premier côté du support et la deuxième masse pendulaire étant disposée axialement d'un deuxième côté du support, et
- au moins un organe de liaison de la première et de la deuxième masses pendulaires appariant lesdites masses, deux rondelles étant de préférence montées sur l'organe de roulement.

Lorsque deux rondelles sont montées sur l'organe de roulement, chacune de ces rondelles peut avoir une portion élastiquement déformable, et l'une de ces portions élastiquement déformable vient frotter contre le premier côté du support et l'autre de ces portions élastiquement déformable vient frotter contre le deuxième côté du support.

Selon une réalisation préférée de ce premier exemple de mise en œuvre de l'invention, l'organe de roulement coopère avec une seule première piste de roulement et avec une seule deuxième piste de roulement, et cette deuxième piste de roulement est définie par l'organe de liaison du corps pendulaire. Une portion du contour de cet organe de liaison définit par exemple la deuxième piste de roulement. En variante, un revêtement peut être déposé sur cette portion du contour de l'organe de liaison pour former la deuxième piste de roulement. Un tel organe de liaison est par exemple emmanché en force via chacune de ses extrémités axiales dans une ouverture ménagée dans une des masses pendulaires. En variante, l'organe de liaison peut être soudé ou vissé ou riveté via ses extrémités axiales sur chaque masse pendulaire.

Selon la réalisation préférée, le déplacement de chaque corps pendulaire par rapport au support peut être guidé par au moins deux organes de roulement, notamment exactement deux organes de roulement. Deux organes de liaison coopérant chacun avec un organe de roulement peuvent être prévus.

Selon cette réalisation préférée, le corps pendulaire peut comprendre deux faces chanfreinées espacées axialement, l'une de ces faces chanfreinée étant ménagée au niveau d'une première extrémité axiale de la deuxième piste de roulement définie par l'organe de liaison et l'autre de ces faces chanfreinées étant ménagée au niveau d'une deuxième extrémité axiale de cette deuxième piste de roulement.

Selon cette réalisation préférée, chaque corps pendulaire comprend par exemple deux organes de liaison appariant chaque masse pendulaire de ce corps, chaque organe de liaison étant solidaire de chacune de ces masses pendulaires. Chaque organe de roulement peut alors être uniquement sollicité en compression entre les première et deuxième pistes de roulement mentionnées ci-dessus. Ces première et deuxième pistes de roulement coopérant avec un même organe de roulement peuvent être au moins en partie radialement en regard, c'est-à-dire qu'il existe des plans perpendiculaires à l'axe de rotation dans lesquels ces pistes de roulement s'étendent toutes les deux.

Selon cette réalisation préférée, lorsque l'organe de roulement porte deux rondelles ayant chacune une portion élastiquement déformable, chacune de la première piste de roulement et de la deuxième piste de roulement peut présenter à une de ses extrémités axiales une face chanfreinée et :
- la portion élastiquement déformable de la première rondelle de l'organe de roulement coopère avec la face chanfreinée de la première extrémité axiale de la première piste de roulement et avec la face chanfreinée de la première extrémité axiale de la deuxième piste de roulement, et
- la portion élastiquement déformable de la deuxième rondelle de l'organe de roulement coopère avec la face chanfreinée de la deuxième extrémité axiale de la première piste de roulement et avec la face chanfreinée de la deuxième extrémité axiale de la deuxième piste de roulement.

Selon la réalisation préférée, chaque organe de roulement peut être reçu dans une fenêtre du support recevant déjà un organe de liaison et ne recevant aucun autre organe de roulement. Cette fenêtre est par exemple définie par un contour fermé dont une portion définit la première piste de roulement solidaire du support qui coopère avec cet organe de roulement.

Selon cette réalisation préférée, chaque organe de roulement peut présenter :
- deux portions d'extrémités axiales de faible diamètre, sur chaque desquelles est montée une rondelle, et
- une portion disposée axialement entre ces deux portions d'extrémité et roulant sur la première piste de roulement et sur la deuxième piste de roulement.

Selon une autre réalisation préférée de ce premier exemple de mise en œuvre de l'invention, l'organe de roulement coopère d'une part avec une seule première piste de roulement solidaire du support, et d'autre part avec deux deuxièmes pistes de roulement solidaires du corps pendulaire. Chaque masse pendulaire présente alors une cavité dont une partie du contour définit une de ces deuxièmes pistes de roulement.

Selon cette autre réalisation préférée, chaque organe de liaison regroupe par exemple plusieurs rivets, et cet organe de liaison est reçu dans une fenêtre du support, tandis que l'organe de roulement est reçu dans une cavité du support, distincte d'une fenêtre recevant un organe de liaison.

Selon cette autre réalisation préférée, deux organes de roulement peuvent guider le déplacement du corps pendulaire par rapport au support et chaque organe de roulement coopère avec une première piste de roulement dédiée à cet organe de roulement et avec deux deuxièmes pistes de roulement dédiées à cet organe de roulement.

Selon cette réalisation préférée, le corps pendulaire peut comprendre deux faces chanfreinées espacées axialement, l'une de ces faces chanfreinée étant ménagée au niveau d'une face de la première masse pendulaire du corps pendulaire en regard du support et l'autre de ces faces chanfreinées étant ménagée au niveau d'une face de la deuxième masse pendulaire en regard du support.

Selon cette autre réalisation préférée, chaque organe de roulement peut alors comprendre successivement axialement:
- une portion disposée dans une cavité de la première masse pendulaire et coopérant avec la deuxième piste de roulement formée par une partie du contour de cette cavité,
- une portion disposée dans une cavité du support et coopérant avec la première piste de roulement formée par une partie du contour de cette cavité, et
- une portion disposée dans une cavité de la deuxième masse pendulaire et coopérant avec la deuxième piste de roulement formée par une partie du contour de cette cavité.

L'une des faces chanfreinées du corps pendulaire est alors ménagée à l'extrémité axiale en regard du support de la cavité de la première masse pendulaire dont une partie du contour forme une des deuxièmes pistes de roulement, et l'autre des faces chanfreinées du corps pendulaire est ménagée à l'extrémité axiale en regard du support de la cavité de la deuxième masse pendulaire dont une partie du contour forme l'autre des deuxièmes pistes pendulaires.

Selon un deuxième exemple de mise en œuvre de l'invention, le dispositif comprend deux supports solidaires et le corps pendulaire comprend au moins une masse pendulaire disposée axialement entre les deux supports. Deux rondelles peuvent être montées sur l'organe de roulement, l'une de ces rondelles venant alors frotter contre l'un des supports et l'autre de ces rondelles venant frotter contre l'autre des supports.

Selon ce deuxième exemple de mise en œuvre de l'invention, le corps pendulaire peut comprendre plusieurs masses pendulaires, par exemple deux ou trois masses pendulaires, qui peuvent ou non être solidarisées entre elles, et qui sont disposées axialement entre les deux supports.

Dans tout ce qui précède, chaque organe de roulement peut coopérer avec la ou les pistes de roulement solidaires du support et avec la ou les pistes de roulement solidaires du corps pendulaire uniquement via sa surface extérieure.

Chaque organe de roulement est par exemple un rouleau. Les extrémités axiales du rouleau peuvent être dépourvues de rebord annulaire fin. Le rouleau est par exemple réalisé en acier. Le rouleau peut être creux ou plein.

La forme des premières et des deuxièmes pistes de roulement peut être telle que chaque corps pendulaire soit uniquement déplacé par rapport au support en translation autour d'un axe fictif parallèle à l'axe de rotation du support.

En variante, la forme des pistes de roulement peut être telle que chaque corps pendulaire soit déplacé par rapport au support à la fois :
- en translation autour d'un axe fictif parallèle à l'axe de rotation du support et,
- également en rotation autour du centre de gravité dudit corps pendulaire, un tel mouvement étant encore appelé « mouvement combiné » et divulgué par exemple dans la demande DE 10 2011 086 532.

Le dispositif comprend par exemple un nombre de corps pendulaires compris entre deux et huit, notamment trois, quatre, cinq ou six corps pendulaires.

Tous ces corps pendulaires peuvent se succéder circonférentiellement. Le dispositif peut ainsi comprendre une pluralité de plans perpendiculaires à l'axe de rotation dans chacun desquels tous les corps pendulaires sont disposés.

Dans tout ce qui précède, le support peut être réalisé d'une seule pièce, étant par exemple entièrement métallique.

Dans tout ce qui précède, le dispositif peut comprendre au moins une pièce d'interposition dont au moins une partie est axialement disposée entre le support et une masse pendulaire du corps pendulaire. La pièce d'interposition est par exemple fixée sur une masse pendulaire ou le support ou formée par un revêtement déposé sur une masse pendulaire ou sur le support. Une telle pièce d'interposition peut ainsi limiter le déplacement axial du corps pendulaire par rapport au support, évitant ainsi les chocs axiaux entre lesdites pièces, et ainsi une usure et des bruits non souhaités, notamment lorsque le support et/ou la masse pendulaire sont en métal. Plusieurs pièces d'interposition, par exemple sous forme de patins, peuvent être prévues. Les pièces d'interposition sont notamment réalisées en un matériau amortissant, tel que du plastique ou du caoutchouc.

Les pièces d'interposition sont par exemple portées par les corps pendulaires, étant notamment fixées sur les corps pendulaires. Les pièces d'interposition peuvent être positionnées sur un corps pendulaire de manière à ce qu'il y ait toujours au moins une pièce d'interposition dont au moins une partie est axialement interposée entre une masse pendulaire et le support, quelles que soient les positions relatives du support et de ladite masse lors du déplacement par rapport au support du corps pendulaire.

Dans tout ce qui précède, chaque corps pendulaire peut comprendre au moins un organe d'amortissement de butée contre le support. Chacun de ces organes d'amortissement de butée peut alors venir en contact avec le support pour amortir la butée du corps pendulaire contre ce dernier, par exemple :
- à l'issue d'un déplacement dans le sens trigonométrique de ce corps pendulaire depuis la position de repos pour filtrer une oscillation de torsion, et/ou
- à l'issue d'un déplacement dans le sens non-trigonométrique de ce corps pendulaire depuis la position de repos pour filtrer une oscillation de torsion, et/ou
- en cas de chute radiale du corps pendulaire, par exemple lors de l'arrêt du moteur thermique du véhicule.

Le cas échéant, chaque organe d'amortissement de butée peut amortir la butée du corps pendulaire contre le support à l'issue d'un déplacement dans le sens trigonométrique depuis la position de repos, à l'issue d'un déplacement dans le sens non-trigonométrique depuis la position de repos mais également en cas de chute radiale du corps pendulaire. Un même organe d'amortissement de butée peut ainsi être associé à un corps pendulaire pour amortir tous les contacts précités entre le corps pendulaire et le support.

Chaque organe d'amortissement de butée peut être dédié à un organe de liaison du corps pendulaire et porté par ce dernier.

Chaque organe d'amortissement de butée peut présenter des propriétés élastiques permettant l'amortissement des chocs liés au contact entre le support et le corps pendulaire. Cet amortissement est alors permis par une compression de l'organe d'amortissement de butée. L'organe d'amortissement de butée est par exemple en élastomère ou en caoutchouc.

L'invention a encore pour objet, selon un autre de ses aspects, un dispositif d'amortissement pendulaire, comprenant :
- un support apte à se déplacer en rotation autour d'un axe,
- au moins un corps pendulaire mobile par rapport au support, et
- au moins un organe de roulement coopérant d'une part avec au moins une première piste de roulement solidaire du support et avec au moins une deuxième de roulement solidaire du corps pendulaire, l'organe de roulement portant au moins une portion élastiquement déformable frottant contre le support et/ou contre le corps pendulaire lors tout ou partie du déplacement de cet organe de roulement par rapport au support et/ou par rapport au corps pendulaire.

Selon cet autre aspect de l'invention, le dispositif peut comprendre un unique support et le corps pendulaire comprendre une première et une deuxième masses pendulaires espacées axialement l'une par rapport à l'autre et mobiles par rapport au support, la première masse pendulaire étant disposée axialement d'un premier côté du support et la deuxième masse pendulaire étant disposée axialement d'un deuxième côté du support, et au moins un organe de liaison de la première et de la deuxième masses pendulaires appariant lesdites masses. Deux rondelles sont de préférence montées sur l'organe de roulement et chaque rondelle frotte contre une masse pendulaire respective.

En variante, selon cet autre aspect de l'invention, le dispositif peut comprendre deux supports solidaires et le corps pendulaire comprendre au moins une masse pendulaire disposée axialement entre les deux supports. Deux rondelles peuvent être montées sur l'organe de roulement, l'une de ces rondelles frottant contre le côté de la masse pendulaire en regard d'un des supports et l'autre de ces rondelles frottant contre le côté de la masse en regard de l'autre support.

L'invention a encore pour objet, selon un autre de ses aspects, un composant pour système de transmission d'un véhicule automobile, le composant étant notamment un double volant amortisseur, un convertisseur de couple hydrodynamique, un volant solidaire du vilebrequin, un double embrayage à sec ou humide, un simple embrayage humide, un composant de groupe motopropulseur hybride, ou encore un disque de friction d'embrayage, comprenant un dispositif d'amortissement pendulaire tel que défini ci-dessus.

Le support du dispositif d'amortissement pendulaire peut alors être l'un parmi :
- un voile du composant,
- une rondelle de guidage du composant,
- une rondelle de phasage du composant, ou
- un support distinct dudit voile, de ladite rondelle de guidage et de ladite rondelle de phasage.

Dans le cas où le dispositif est intégré à un volant solidaire du vilebrequin, le support peut être solidaire de ce volant primaire.

L'invention a encore pour objet, selon un autre de ses aspects, un groupe motopropulseur de véhicule comprenant :
- un moteur thermique de propulsion du véhicule, notamment à deux, trois, quatre, six ou huit cylindres, et
- un composant pour système de transmission tél que défini ci-dessus.

Chaque corps pendulaire est par exemple accordé de manière à filtrer l'ordre d'excitation d'un moteur thermique à deux cylindres, c'est-à-dire pour filtrer l'ordre 1.

Le moteur thermique peut être à deux cylindres, auquel cas les corps pendulaires peuvent être accordés pour filtrer l'ordre d'excitation de ce moteur lorsque tous ses cylindres sont actifs.

Le cas échéant, un système de désactivation de cylindres peut permettre de ne faire fonctionner le moteur thermique qu'avec certains seulement de ces cylindres actifs. Le moteur peut ainsi présenter un mode de fonctionnement dans lequel seulement deux de ses cylindres sont actifs et un ou plusieurs des corps pendulaires sont accordés pour filtrer l'ordre d'excitation de ce moteur dans ce mode de fonctionnement. Le moteur thermique est par exemple à quatre, six ou huit cylindres, et les corps pendulaires peuvent être accordés pour filtrer l'ordre d'excitation de ce moteur lorsque seulement deux de ses cylindres sont actifs.

L'invention pourra être mieux comprise à la lecture de la description qui va suivre d'exemples non limitatifs de mise en œuvre de celle-ci et à l'examen du dessin annexé sur lequel :
- la figure 1 représente de façon schématique un dispositif d'amortissement pendulaire selon un premier exemple de mise en œuvre de l'invention,
- la figure 2 représente un détail de la figure 1, l'une des masses pendulaires du corps pendulaire n'étant pas représentée,
- la figure 3 est une vue de face de ce qui est représenté sur la figure 2,
- la figure 4 est une vue en coupe selon IV-IV de ce qui est représenté sur la figure 3,
- la figure 5 est une vue similaire à la figure 4 mais pour une autre position de l'organe de roulement par rapport au support,
- les figures 6 et 7 sont deux variantes de montage des rondelles sur l'organe de roulement,
- les figures 8 et 11 représentent deux autres variantes du premier exemple de mise en œuvre de l'invention, et
- les figures 9 et 10 sont deux variantes d'un dispositif d'amortissement pendulaire selon un deuxième exemple de mise en œuvre de l'invention.

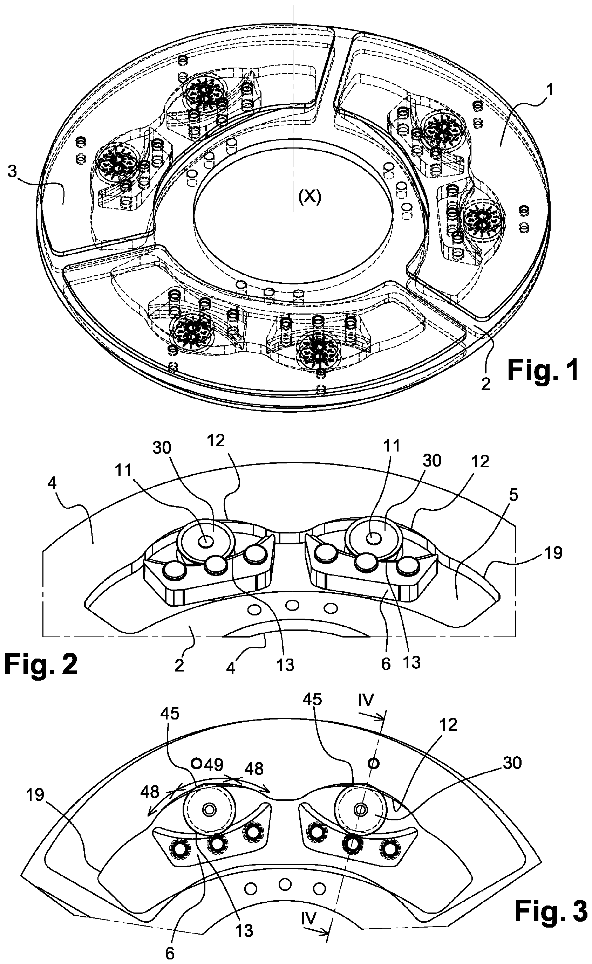

On a représenté sur la figure 1 un dispositif d'amortissement 1 pendulaire.

Le dispositif d'amortissement 1 est de type oscillateur pendulaire. Le dispositif 1 est notamment apte à équiper un système de transmission de véhicule automobile, étant par exemple intégré à un composant non représenté d'un tel système de transmission, ce composant étant par exemple un double volant amortisseur, un convertisseur de couple hydrodynamique, un disque de friction d'embrayage, un double embrayage à sec ou humide, ou un volant solidaire du vilebrequin.

Ce composant peut faire partie d'un groupe motopropulseur d'un véhicule automobile, ce groupe comprenant un moteur thermique notamment à deux, trois quatre, six ou huit cylindres.

Sur la figure 1, le dispositif 1 est au repos, c'est-à-dire qu'il ne filtre pas les oscillations de torsion transmises par la chaîne de propulsion du fait des acyclismes du moteur thermique.

De manière connue, un tel composant peut comprendre un amortisseur de torsion présentant au moins un élément d'entrée, au moins un élément de sortie, et des organes de rappel élastique à action circonférentielle qui sont interposés entre lesdits éléments d'entrée et de sortie. Au sens de la présente demande, les termes « entrée » et « sortie » sont définis par rapport au sens de transmission du couple depuis le moteur thermique du véhicule vers les roues de ce dernier.

Le dispositif 1 comprend dans l'exemple considéré:
- un support 2 apte à se déplacer en rotation autour d'un axe X, et
- une pluralité de corps pendulaires 3 mobiles par rapport au support 2.

Selon les exemples de mise en œuvre de l'invention qui vont être décrits ultérieurement, le support 2 n'est pas nécessairement unique. On observe par ailleurs sur la figure 1 que trois corps pendulaires 3 sont prévus, étant répartis de façon uniforme sur le pourtour de l'axe X.

Le support 2 du dispositif d'amortissement pendulaire 1 peut être constitué par :
- un élément d'entrée de l'amortisseur de torsion,
- un élément de sortie,
- un élément de phasage intermédiaire disposé entre deux séries de ressort de l'amortisseur, ou
- un élément lié en rotation à un des éléments précités et distinct de ces derniers, étant alors par exemple un support propre au dispositif 1.

Le support 2 est notamment une rondelle de guidage ou une rondelle de phasage. Le support peut encore être autre, par exemple un flasque du composant.

Selon un premier exemple de mise en œuvre de l'invention, qui va maintenant être décrit en référence aux figures 1 à 8 et 11, le support 2 est unique et il présente globalement une forme d'anneau comportant deux côtés opposés 4 qui sont ici des faces planes.

Comme on peut le deviner des figures 1 et 2, chaque corps pendulaire 3 comprend dans l'exemple considéré :
- deux masses pendulaires 5, chaque masse pendulaire 5 s'étendant axialement en regard d'un côté 4 du support 2, et
- deux organes de liaison 6 solidarisant les deux masses pendulaires 5.

Les organes de liaison 6, encore appelés « entretoises », sont dans l'exemple considéré décalés angulairement.

Dans l'exemple de la figure 1, chaque organe de liaison 6 est solidarisé aux masses pendulaires 5 en étant vissé sur chaque masse pendulaire 5.

Le dispositif 1 comprend encore des organes de roulement 11 guidant le déplacement des corps pendulaires 3 par rapport au support 2. Les organes de roulement 11 sont ici des rouleaux présentant plusieurs diamètres successifs différents. Chaque organe de roulement 11 présente ainsi un axe longitudinal parallèle à l'axe de rotation X du support 2.

Dans l'exemple décrit, le mouvement par rapport au support 2 de chaque corps pendulaire 3 est guidé par deux organes de roulement 11.

Chaque organe de roulement 11 est reçu dans l'exemple des figures 1 à 5 dans une fenêtre 19 ménagée dans le support 2. Dans les exemples considérés, chaque fenêtre 19 ne reçoit qu'un seul organe de roulement 11.

Dans cet exemple des figures 1 à 5, chaque organe de roulement 11 coopère d'une part avec une première piste de roulement 12 solidaire du support 2, et qui est ici formée par une portion du contour de la fenêtre 19, et d'autre part avec une deuxième piste de roulement 13 solidaire du corps pendulaire 3 et définie par une portion du bord radialement extérieur de l'organe de liaison 6.

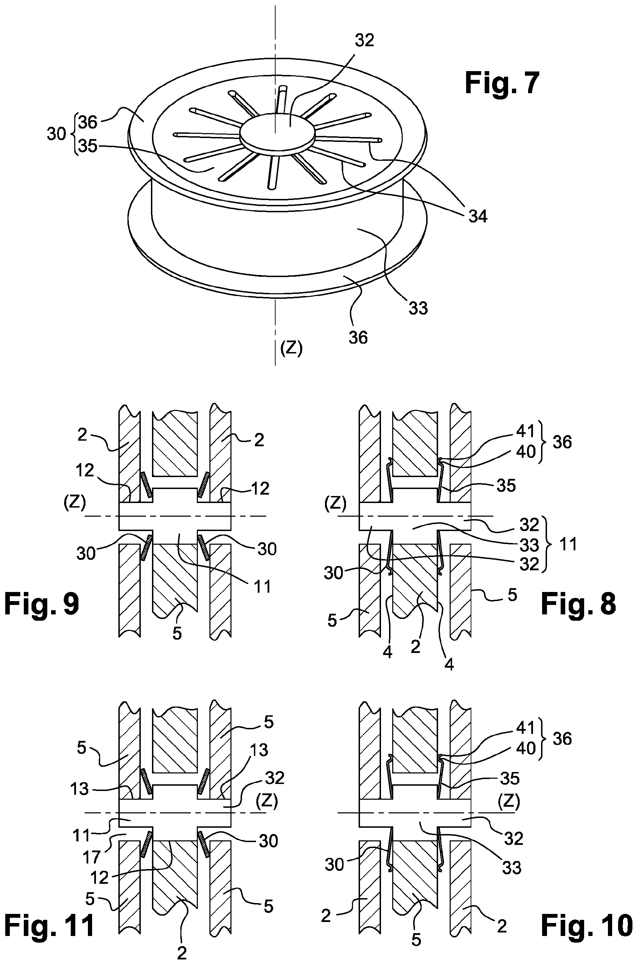

Dans les exemples des figures 8 et 11, chaque organe de roulement 11 coopère d'une part avec une première piste de roulement 12 solidaire du support, et qui est formée par une portion du contour d'une cavité distincte d'une fenêtre 19, et d'autre part avec deux deuxièmes pistes de roulement 13 solidaires du corps pendulaire 3 et distinctes. Chacune de ces deuxièmes pistes de roulement 13 est ici formée par une portion du contour d'une cavité 17 ménagée dans une des masses pendulaires 5 de ce corps pendulaire 3. Une deuxième piste de roulement 13 est ainsi formée par une portion du contour de la cavité 17 ménagée dans la première masse pendulaire 5 de ce corps pendulaire et l'autre deuxième piste de roulement 13 est formée par une portion du contour de la cavité 17 ménagée dans la deuxième masse pendulaire 5 de ce corps pendulaire 3.

Le dispositif 1 peut comprendre encore des organes d'amortissement de butée, bien que ces derniers ne soient pas sur la figure 1. Chaque organe d'amortissement de butée est dans l'exemple considéré réalisé en caoutchouc.

Selon l'invention telle que décrite en référence aux figures 1 à 9, chaque organe de roulement 11 porte au moins une portion élastiquement déformable frottant contre le support 2 lors tout ou partie du déplacement de cet organe de roulement 11 par rapport au support 2. Plus précisément, chaque organe de roulement 11 guidant le déplacement par rapport au support 2 d'un corps pendulaire 3 porte ici deux rondelles 30 dont au moins une portion est élastiquement déformable. Ces rondelles 30 sont ici des rondelles de type Belleville, et chacune de ces rondelles 30 frotte contre le support lors de tout le déplacement par rapport à ce dernier de l'organe de roulement 11.

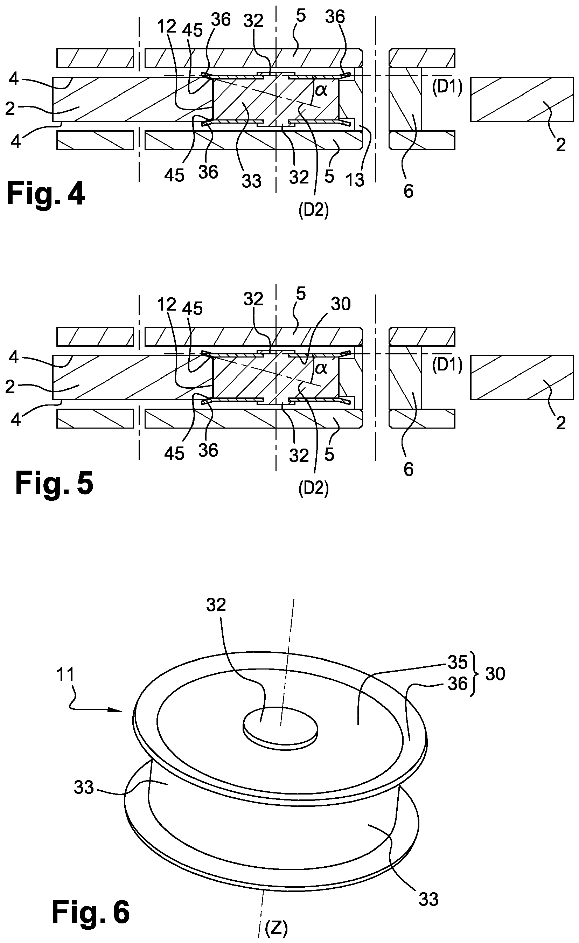

Comme on peut le voir sur les figures 4 à 7, chaque rondelle 30 est montée sur une portion d'extrémité 32 d'un organe de roulement 11 formée par la portion de plus petit diamètre de cet organe de roulement 11. Chaque organe de roulement 11 présente ainsi, sur une première portion d'extrémité 32, une première rondelle 30 et, sur une deuxième portion d'extrémité 32, une deuxième rondelle 30. Entre ces deux portions d'extrémités 32 est axialement disposée une portion 33 de diamètre plus important qui vient rouler sur chaque piste de roulement 12 et 13pour guider le déplacement du corps pendulaire 3 par rapport au support 2.

Dans l'exemple des figures 4 à 6, chaque rondelle 30 est fixée par rivetage sur la portion d'extrémité correspondante 32 de l'organe de roulement 11.

Dans l'exemple de la figure 7, chaque rondelle 30 est fixée par encliquetage sur la portion d'extrémité correspondante 32 de l'organe de roulement 11. Dans ce but, chaque rondelle 30 présente une série de fentes 34 permettant cet encliquetage sur la portion d'extrémité 32 correspondante de l'organe de roulement 11

Comme on peut le voir sur les figures 4 à 7, chaque rondelle 30 présente dans l'exemple décrit une partie centrale 35 sensiblement plane s'étendant autour d'un axe Z et une partie extérieure 36 par rapport à cet axe Z qui s'étend obliquement par rapport à la partie centrale 35. La partie extérieure 36 peut être plane ou incurvée. Dans le cas d'une fixation par encliquetage des rondelles 30 sur l'organe de roulement 11, les fentes 34 ne sont par exemple ménagées que dans la partie centrale 35 de la rondelle 30.

Comme on le voit notamment sur les figures 4 et 5, pour un même organe de roulement 11, la partie extérieure 36 de la première rondelle 30 et la partie extérieure 36 de la deuxième rondelle 30 peuvent s'étendre en éloignement l'une de l'autre, lorsque l'on s'éloigne de l'axe Z qui est commun à ces rondelles 30.

La forme de la rondelle 30 peut encore être autre, par exemple comme selon les figures 8 et 10. La partie extérieure 36 de la rondelle comprend dans ce cas :
- d'une part une fraction proximale 40 naissant sur la partie centrale 35 et se rapprochant du support 2,
- puis une fraction distale 41 s'éloignant du support 2 et définissant l'extrémité extérieure de la rondelle 30 par rapport à son axe Z.

Comme on peut le voir notamment sur les figures 3 à 5, le support 2 comprend ici, pour chaque organe de roulement 11, deux faces chanfreinées 45. Chaque face chanfreinée est ici ménagée au niveau d'une extrémité axiale de la première piste de roulement 12 avec laquelle coopère cet organe de roulement 11, et chaque face chanfreinée 45 s'étend ici circonférentiellement, sur toute la dimension circonférentielle de cette première piste de roulement 12.

Comme cela est notamment visible sur la figure 3, chaque face chanfreinée 45 présente une forme non constante lorsque l'on se déplace circonférentiellement le long de l'extrémité axiale de la première piste de roulement 12 sur laquelle est ménagée cette face chanfreinée 45.

On constate ainsi que la face chanfreinée 45 comprend ainsi d'une extrémité circonférentielle à l'autre :
- une deuxième portion 48,
- une première portion 49, s'étendant de part et d'autre d'une position neutre qu'occupe l'organe de roulement 11 lorsque le corps pendulaire 3 est au repos, et
- une autre deuxième portion 48.

On constate ainsi que les deuxièmes portions 48 entourent circonférentiellement parlant la première portion 49. La première portion 49 s'étend dans l'exemple considéré sur une dimension circonférentielle mesurée depuis l'axe de rotation X du support 2 le long de la face chanfreinée comprise entre 70% et 90%, de la dimension circonférentielle de cette face chanfreinée, cette dernière étant mesurée depuis l'axe de rotation X entre les extrémités circonférentielles des deuxièmes portions 48 les plus éloignées de la position neutre.

Comme on peut le voir en comparant les figures 4 et 5, l'angle α ménagé entre :
- une droite D1 perpendiculaire à l'axe de rotation X et parallèle à un côté 4 du support, et
- la droite D2 selon laquelle est orientée la face chanfreinée 45, lorsque cette face chanfreinée 45 est plane,
   peut être différent de la première portion 49 à la deuxième portion 48. Ainsi, on constate que cet angle α a une valeur supérieure au niveau de la première portion 49 à la valeur qu'il prend au niveau de chaque deuxième portion 48.

Dans l'exemple décrit, l'angle α reste constant à une première valeur sur toute la première portion 49, et il reste constant à une deuxième valeur sur toute la deuxième portion 48, prenant une même deuxième valeur d'une deuxième portion 48 à l'autre, mais d'autres variantes sont possibles, par exemple :
- une variation de l'angle α au sein d'une première plage de valeurs sur la première portion 49,
- une variation de l'angle α au sein d'une deuxième plage de valeurs sur une deuxième portion 48, et
- une variation de l'angle α au sein d'une troisième plage de valeurs sur une autre deuxième portion 48, les deuxième et troisième plages de valeurs étant le cas échéant égales.

Bien que cela ne soit pas représenté sur les figures, le corps pendulaire 3 peut également comprendre des faces chanfreinées.

Dans l'exemple des figures 1 à 5, chaque organe de liaison 6 peut présenter une face chanfreinée au niveau de chaque extrémité axiale de la deuxième piste de roulement 13 qu'il définit.

Comme cela a été décrit en référence aux faces chanfreinées 45 précédemment, chaque face chanfreinée ménagée sur un organe de liaison peut également présenter une forme non constante.

Une telle face chanfreinée peut ainsi comprendre, d'une extrémité circonférentielle à l'autre :
- une deuxième portion,
- une première portion, s'étendant de part et d'autre d'une position neutre qu'occupe l'organe de roulement 11 lorsque le corps pendulaire 3 est au repos, et
- une autre deuxième portion.

Le cas échéant, pour un même organe de roulement 11, la première portion de la face chanfreinée du corps pendulaire 3 correspond exactement à la première portion 49 de la face chanfreinée 45 du support 2, et chaque deuxième portion de la face chanfreinée du corps pendulaire correspond exactement à une deuxième portion 48 de la face chanfreinée 45 du support 2, c'est-à-dire que dès lors que l'organe de roulement 11 coopère avec la première portion de la face chanfreinée du corps pendulaire il coopère également avec la première portion 49 de la face chanfreinée 45 du support 2, et dès lors que l'organe de roulement 11 coopère avec une deuxième portion de la face chanfreinée du corps pendulaire, il coopère également avec une deuxième portion 48 de la face chanfreinée 45 du support.

Similairement à ce qui a été mentionné en rapport avec les faces chanfreinées 45, l'angle ménagé entre une droite perpendiculaire à l'axe de rotation X et la droite selon laquelle est orientée la face chanfreinée du corps pendulaire 3, lorsque cette face chanfreinée est plane, peut être différent de la première portion à la deuxième portion de cette face chanfreinée, ayant par exemple une valeur au niveau de la première portion supérieure à celle que cet angle prend au niveau des deuxièmes portions.

On va maintenant décrire le fonctionnement du dispositif selon le premier exemple de mise en œuvre de l'invention, tel que représenté sur les figures 1 à 8.

Lorsqu'une oscillation de torsion est filtrée par le dispositif 1, chaque organe de roulement 11 se déplace en roulant le long de la première piste de roulement 12 et de la ou les deuxièmes pistes de roulement 13 qui lui sont associées. Lors de ce déplacement, chaque partie extérieure 36 d'une rondelle 30 frotte contre une face chanfreinée 45 du support 2.

Tant que les parties extérieures 36 frottent contre une première portion 49 de la face chanfreinée 45 correspondante, la force de frottement exercée sur l'organe de roulement 11 est faible, de sorte que les performances de filtrage du dispositif 1 ne sont que marginalement affectées par le phénomène de frottement se produisant. Ce frottement faible se produit avantageusement au niveau de la course de l'organe de roulement 11 utile pour le filtrage des oscillations de torsion.

Lorsque les parties extérieures 36 des rondelles 30 frottent contre une deuxième portion 48 de la face chanfreinée 45 correspondante, du fait de l'angle différent du chanfrein, la force de frottement est plus importante, ralentissant de manière plus importante le déplacement de l'organe de roulement 11, et donc du corps pendulaire 3, et entravant ainsi l'effet de la gravité sur ce dernier.

Les figures 9 et 10 représentent un deuxième exemple de mise en œuvre de l'invention qui diffère essentiellement du premier exemple, tel que décrit en référence aux figures 1 à 8, par le fait que le dispositif d'amortissement pendulaire 1 comprend ici deux supports 2 solidaires et décalés axialement, et par le fait que chaque corps pendulaire 3 comprend ici une unique masse pendulaire 5 disposée axialement entre les deux supports 2.

Similairement à ce qui a été décrit précédemment, chaque organe de roulement 11 porte deux rondelles 30 et, dans l'exemple de la figure 10, chacune de ces rondelles 30 porte une partie extérieure élastiquement déformable 36 venant frotter contre un support 2. Une première rondelle 30 présente ainsi une partie extérieure 36 frottant contre la face chanfreinée 45 du premier support 2, et une deuxième rondelle 30 présente une partie extérieure 36 frottant contre la face chanfreinée du deuxième support 2.

Le fonctionnement du dispositif 1 selon le deuxième exemple de mise en œuvre, tel que décrit en référence à la figure 10, est le même que celui décrit en référence au premier exemple de mise en œuvre des figures 1 à 8.

L'invention n'est pas limitée aux exemples qui viennent d'être décrits.

Chaque rondelle 30 peut porter une portion élastiquement déformable venant frotter non pas contre le support 2 mais seulement contre une masse pendulaire 5, comme représenté par exemple sur la figure 11 pour le premier exemple de mise en œuvre de l'invention, et comme représenté par exemple sur la figure 10 pour le deuxième exemple de mise en œuvre de l'invention.

Sur la figure 11, chaque rondelle 30 est dédiée à une masse pendulaire 5 du corps pendulaire 3, de sorte qu'une rondelle 30 portée par l'organe de roulement 11 frotte contre la première masse pendulaire 5 du corps pendulaire 3 et que l'autre rondelle 30 portée par cet organe de roulement 11 frotte contre la deuxième masse pendulaire 5 de ce corps pendulaire.

Sur la figure 10, l'une des rondelles 30 frotte contre le côté de la masse pendulaire 5 en regard d'un des supports 2 tandis que l'autre rondelle 30 frotte contre le côté de cette même masse pendulaire 5 qui est en regard de l'autre support 2.

Par ailleurs, une rondelle présentant une forme selon les figures 8 ou 10 peut remplacer celles des exemples selon les figures 1 à 7 et selon les figures 9 et 11.

## Revendications

1. Dispositif d'amortissement pendulaire (1), comprenant :
- un support (2) apte à se déplacer en rotation autour d'un axe (X),
- au moins un corps pendulaire (3) mobile par rapport au support (2), et
- au moins un organe de roulement coopérant d'une part avec au moins une première piste de roulement (12) solidaire du support (2) et avec au moins une deuxième piste de roulement solidaire (13) du corps pendulaire (3), l'organe de roulement (11) portant au moins une portion élastiquement déformable (36) frottant contre le support (2) lors tout ou partie du déplacement de cet organe de roulement (11) par rapport au support (2), notamment lors de tout le déplacement de cet organe de roulement (11) par rapport au support (2),
**caractérisé en ce que** le support (2) comprend au moins une face chanfreinée (45) contre laquelle la portion élastiquement déformable (36) frotte lors de tout ou partie du déplacement de cet organe de roulement (11) par rapport au support (2).

2. Dispositif selon la revendication 1, la portion élastiquement déformable (36) appartenant à une rondelle (30) montée sur l'organe de roulement (11).

3. Dispositif selon l'une des revendications précédentes, la face chanfreinée (45) s'étendant circonférentiellement et présentant une forme non constante circonférentiellement.

4. Dispositif selon la revendication 3, la face chanfreinée (45) comprenant :
- une première portion (49) s'étendant de part et d'autre d'une position neutre contre laquelle frotte la portion élastiquement déformable (36) portée par l'organe de roulement (11) lorsque le corps pendulaire (3) est au repos, et
- deux deuxièmes portions (48), chaque deuxième portion (48) s'étendant angulairement au-delà de la première portion (49) en éloignement de la position neutre,
de sorte que la première portion (49) soit circonférentiellement située entre les deux deuxièmes portions (48), la première portion (49) de la face chanfreinée (45) ayant une forme différente de la forme des deuxièmes portions (48) de cette face chanfreinée (45).

5. Dispositif selon la revendication 4, la forme de la première portion (49) et la forme des deuxièmes portions (48) étant telles que la force de frottement exercée par la portion élastiquement déformable (36) portée par l'organe de roulement (11) sur la première portion (49) de la face chanfreinée (45) soit inférieure à la force de frottement exercée par la portion élastiquement déformable (36) portée par l'organe de roulement (11) sur une deuxième portion (48) de la face chanfreinée (45).

6. Dispositif selon l'une quelconque des revendications précédentes, le corps pendulaire (3) comprenant au moins une face chanfreinée contre laquelle la portion élastiquement déformable (36) frotte lors de tout ou partie du déplacement de cet organe de roulement (11) par rapport au corps pendulaire (3).

7. Dispositif selon l'une quelconque des revendications précédentes, comprenant un unique support (2), le corps pendulaire (3) comprenant :
- une première et une deuxième masses pendulaires (5) espacées axialement l'une par rapport à l'autre et mobiles par rapport au support (2), la première masse pendulaire (5) étant disposée axialement d'un premier côté (4) du support (2) et la deuxième masse pendulaire (5) étant disposée axialement d'un deuxième côté (4) du support (2), et
- au moins un organe de liaison (6) de la première et de la deuxième masses pendulaires (5) appariant lesdites masses,
deux rondelles (30) ayant chacune une portion élastiquement déformable (36) étant montées sur l'organe de roulement (11), l'une de ces portions élastiquement déformable (36) venant frotter contre le premier côté (4) du support (2) et l'autre de ces portions élastiquement déformable (36) venant frotter contre le deuxième côté (4) du support (2).

8. Dispositif selon la revendication précédente, l'organe de roulement (11) coopérant avec une unique deuxième piste de roulement (13), cette deuxième piste de roulement (13) étant définie par l'organe de liaison (6) du corps pendulaire (3).

9. Dispositif selon la revendication 7, l'organe de roulement (11) coopérant avec deux deuxièmes pistes de roulement (13) solidaires du corps pendulaire (3), chaque masse pendulaire (5) présentant une cavité (17) dont une portion du contour définit une de ces deuxièmes pistes de roulement (13).

10. Dispositif selon l'une quelconque des revendications 1 à 7, comprenant deux supports (2) solidaires et espacés axialement, le corps pendulaire (3) comprenant au moins une masse pendulaire (5) disposée axialement entre les deux supports (2), deux rondelles (30) ayant chacune une portion élastiquement déformable (36) étant montées sur l'organe de roulement (11), l'une de ces portions élastiquement déformable (36) venant frotter contre l'un des supports (2) et l'autre de ces portions élastiquement déformable (36) venant frotter contre l'autre des supports (2).

## Patentansprüche

1. Pendel-Dämpfungsvorrichtung (1), umfassend:
- einen Träger (2), der imstande ist, sich rotierend um eine Achse (X) zu bewegen,
- mindestens einen in Bezug auf den Träger (2) beweglichen Pendelkörper (3), und
- mindestens ein Rollelement, das zum einem mit mindestens einem ersten Rollweg (12), der mit dem Träger (2) fest verbunden ist, und mit mindestens einem zweiten Rollweg (13), der mit dem Pendelkörper (3) fest verbunden ist, zusammenwirkt, wobei das Rollelement (11) mindestens einen elastisch verformbaren Abschnitt (36) trägt, der während der gesamten oder eines Teils der Bewegung dieses Rollelements (11) in Bezug auf den Träger (2), insbesondere während der gesamten Bewegung dieses Rollelements (11) in Bezug auf den Träger (2), am Träger (2) reibt,
**dadurch gekennzeichnet, dass** der Träger (2) mindestens eine abgeschrägte Fläche (45) umfasst, an welcher der elastisch verformbare Abschnitt (36) während der gesamten oder eines Teils der Bewegung dieses Rollelements (11) in Bezug auf den Träger (2) reibt.

2. Vorrichtung nach Anspruch 1, wobei der elastisch verformbare Abschnitt (36) zu einer Scheibe (30) gehört, die auf dem Rollelement (11) angebracht ist.

3. Vorrichtung nach einem der vorangehenden Ansprüche, wobei sich die abgeschrägte Fläche (45) umfangsmäßig erstreckt und eine umfangsmäßig nicht konstante Form aufweist.

4. Vorrichtung nach Anspruch 3, wobei die abgeschrägte Fläche (45) umfasst:
- einen ersten Abschnitt (49), der sich beiderseits einer neutralen Position erstreckt, an welchem der elastisch verformbare, von dem Rollelement (11) getragene Abschnitt (36) reibt, wenn der Pendelkörper (3) in Ruhestellung ist, und
- zwei zweite Abschnitte (48), wobei sich jeder zweite Abschnitt (48) winklig jenseits des ersten Abschnitts (49) erstreckt und sich dabei von der neutralen Position entfernt,
so dass der erste Abschnitt (49) umfangsmäßig zwischen den zwei zweiten Abschnitten (48) liegt, wobei der erste Abschnitt (49) der abgeschrägten Fläche (45) eine Form hat, die sich von der Form der zweiten Abschnitte (48) dieser abgeschrägten Fläche (45) unterscheidet.

5. Vorrichtung nach Anspruch 4, wobei die Form des ersten Abschnitts (49) und die Form der zweiten Abschnitte (48) derart sind, dass die von dem elastisch verformbaren, von dem Rollelement (11) getragenen Abschnitt (36) auf den ersten Abschnitt (49) der abgeschrägten Fläche (45) ausgeübte Reibungskraft kleiner als die Reibungskraft ist, die von dem elastisch verformbaren, von dem Rollelement (11) getragenen Abschnitt (36) auf einen zweiten Abschnitt (48) der abgeschrägten Fläche (45) ausgeübt wird.

6. Vorrichtung nach einem der vorangehenden Ansprüche, wobei der Pendelkörper (3) mindestens eine abgeschrägte Fläche umfasst, an welcher der elastisch verformbare Abschnitt (36) während der gesamten oder eines Teils der Bewegung dieses Rollelements (11) in Bezug auf den Pendelkörper (3) reibt.

7. Vorrichtung nach einem der vorangehenden Ansprüche, umfassend einen einzigen Träger (2), wobei der Pendelkörper (3) umfasst:
- eine erste und eine zweite Pendelmasse (5), die axial voneinander beabstandet und in Bezug auf den Träger (2) beweglich sind, wobei die erste Pendelmasse (5) axial auf einer ersten Seite (4) des Trägers (2) angeordnet ist und die zweite Pendelmasse (5) axial auf einer zweiten Seite (4) des Trägers (2) angeordnet ist, und
- mindestens ein Verbindungsorgan (6) der ersten und der zweiten Pendelmasse (5), welches die Massen paart, wobei zwei Scheiben (30), die jeweils einen elastisch verformbaren Abschnitt (36) haben, auf dem Rollelement (11) angebracht sind, wobei einer dieser elastisch verformbaren Abschnitte (36) an der ersten Seite (4) des Trägers (2) reibt und der andere dieser elastisch verformbaren Abschnitte (36) an der zweiten Seite (4) des Trägers (2) reibt.

8. Vorrichtung nach vorangehendem Anspruch, wobei das Rollelement (11) mit einem einzigen zweiten Rollweg (13) zusammenwirkt, wobei dieser zweite Rollweg (13) von dem Verbindungsorgan (6) des Pendelkörpers (3) festgelegt ist.

9. Vorrichtung nach Anspruch 7, wobei das Rollelement (11) mit zwei zweiten Rollwegen (13) zusammenwirkt, die mit dem Pendelkörper (3) fest verbunden sind, wobei jede Pendelmasse (5) einen Hohlraum (17) aufweist, von dem ein Abschnitt der Kontur einen dieser zweiten Rollwege (13) festlegt.

10. Vorrichtung nach einem der Ansprüche 1 bis 7, umfassend zwei Träger (2), die fest miteinander verbunden und axial beabstandet sind, wobei der Pendelkörper (3) mindestens eine Pendelmasse (5) umfasst, die axial zwischen den zwei Trägern (2) angeordnet ist, wobei zwei Scheiben (30), die jeweils einen elastisch verformbaren Abschnitt (36) haben, auf dem Rollelement (11) angebracht sind, wobei einer dieser elastisch verformbaren Abschnitte (36) an einem der Träger (2) reibt und der andere dieser elastisch verformbaren Abschnitte (36) an dem anderen der Träger (2) reibt.

## Claims

1. Pendulum damping device (1), comprising:
- a support (2) capable of rotational movement about an axis (X),
- at least one pendulum body (3) able to move with respect to the support (2), and
- at least one rolling member collaborating on the one hand with at least one first runway track (12) secured to the support (2) and with at least one second runway track (13) secured to the pendulum body (3), the rolling member (11) bearing at least one elastically deformable portion (36) rubbing against the support (2) during all or part of the movement of this rolling member (11) with respect to the support (2), notably during all of the movement of this rolling member (11) with respect to the support (2),
**characterized in that** the support (2) comprises at least one chamfered face (45) against which the elastically deformable portion (36) rubs during all or part of the movement of this rolling member (11) with respect to the support (2).

2. Device according to Claim 1, the elastically deformable portion (36) belonging to a washer (30) mounted on the rolling member (11).

3. Device according to one of the preceding claims, the chamfered face (45) extending circumferentially and having a shape that is circumferentially non-constant.

4. Device according to Claim 3, the chamfered face (45) comprising:
- a first portion (49) extending on each side of a neutral position against which the elastically deformable portion (36) borne by the rolling member (11) rubs when the pendulum body (3) is at rest, and
- two second portions (48), each second portion (48) extending angularly beyond the first portion (49) in the direction away from the neutral position,
so that that the first portion (49) is situated circumferentially between the two second portions (48), the first portion (49) of the chamfered face (45) having a shape different from the shape of the second portions (48) of this chamfered face (45).

5. Device according to Claim 4, the shape of the first portion (49) and the shape of the second portions (48) being such that the friction force exerted by the elastically deformable portion (36) borne by the rolling member (11) on the first portion (49) of the chamfered face (45) is lower than the friction force exerted by the elastically deformable portion (36) borne by the rolling member (11) on a second portion (48) of the chamfered face (45).

6. Device according to any one of the preceding claims, the pendulum body (3) comprising at least one chamfered face against which the elastically deformable portion (36) rubs during all or part of the movement of this rolling member (11) with respect to the pendulum body (3) .

7. Device according to any one of the preceding claims, comprising a single support (2), the pendulum body (3) comprising:
- a first and a second pendulum mass (5) which are spaced apart axially and able to move with respect to the support (2), the first pendulum mass (5) being positioned axially on a first side (4) of the support (2) and the second pendulum mass (5) being positioned axially on a second side (4) of the support (2), and
- at least one connecting member (6) that connects the first and second pendulum masses (5) pairing the said masses,
two washers (30) each having an elastically deformable portion (36) being mounted on the rolling member (11), one of these elastically deformable portions (36) coming to rub against the first side (4) of the support (2) and the other of these elastically deformable portions (36) coming to rub against the second side (4) of the support (2) .

8. Device according to the preceding claim, the rolling member (11) collaborating with a single second runway track (13), this second runway track (13) being defined by the connecting member (6) of the pendulum body (3).

9. Device according to Claim 7, the rolling member (11) collaborating with two second runway tracks (13) secured to the pendulum body (3), each pendulum mass (5) having a cavity (17) a portion of the contour of which defines one of these second runway tracks (13).

10. Device according to any one of Claims 1 to 7, comprising two supports (2) which are secured together and axially spaced apart, the pendulum body (3) comprising at least one pendulum mass (5) positioned axially between the two supports (2), two washers (30) each having an elastically deformable portion (36) being mounted on the rolling member (11), one of these elastically deformable portions (36) coming to rub against one of the supports (2) and the other of these elastically deformable portions (36) coming to rub against the other of the supports (2).
